(19) Europäisches Patentamt
European Patent Office
Office européen des brevets

(11) **EP 3 265 774 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16707635.5**

(22) Anmeldetag: **01.03.2016**

(51) Int Cl.:
*G01M 17/10* (2006.01)   *B61L 1/00* (2006.01)
*B61L 23/04* (2006.01)   *B61K 9/12* (2006.01)

(86) Internationale Anmeldenummer:
**PCT/EP2016/000352**

(87) Internationale Veröffentlichungsnummer:
**WO 2016/138986 (09.09.2016 Gazette 2016/36)**

(54) **DIAGNOSEEINRICHTUNG ZUR FESTSTELLUNG EINER UNRUNDHEIT AN SCHIENENFAHRZEUGRÄDERN NACH EINEM KRAFTSTOSS-AUSWERTEVERFAHREN**

DIAGNOSTIC DEVICE FOR DETERMINING AN OUT-OF-ROUNDNESS ON RAIL VEHICLE WHEELS IN ACCORDANCE WITH AN IMPULSE EVALUATION METHOD

DISPOSITIF DE DIAGNOSTIC PERMETTANT DE DÉTECTER UNE EXCENTRICITÉ AU NIVEAU DES ROUES DE VÉHICULES FERROVIAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 DE 102015002517**

(43) Veröffentlichungstag der Anmeldung:
**10.01.2018 Patentblatt 2018/02**

(73) Patentinhaber: **Schenck Process Europe GmbH 64293 Darmstadt (DE)**

(72) Erfinder:
• **EHMKE, Fritz**
  **64397 Modautal-Lützelbach (DE)**
• **RAIS, Viktor**
  **64397 Modautal (DE)**

(56) Entgegenhaltungen:
**EP-A1- 1 197 417       EP-A1- 2 631 150**
**WO-A1-2006/125237    DE-A1- 3 309 908**
**DE-A1- 19 941 843      DE-U1- 20 317 201**
**DE-U1-202006 005 190**

## Beschreibung

Die Erfindung betrifft eine Diagnoseeinrichtung zur Feststellung einer Unrundheit an Fahrzeugrädern von Schienenfahrzeugen, innerhalb einer vorgegebenen Messstrecke, mit mehreren Kraftsensoren, die zur Ermittlung von auf sie wirkenden Kräfte ausgelegt / vorbereitet sind und mit einer Auswertevorrichtung verbunden sind, wobei die Auswertevorrichtung zur Ermittlung der Unrundheit ausgelegt / vorbereitet ist.

Schienenfahrzeuge können beim Vorbeifahren unerwünschte Schwingungen erzeugen. Eine Ursache dafür sind etwa unrunde Räder mit mehreren Ecken bzw. Abplattungen, die über den Umfang des Rades verteilt sind. Unrundheiten bei Schienenfahrzeugrädern, etwa Rädern von Zügen, wie Personenzügen oder Güterzügen, inkl. deren Lokomotiven haben negative Auswirkungen. So führen sie zu unerwünschten Bodenschwingungen in angrenzenden Gebäuden, verursachen eine hohe Lärmemission, vermindern den Fahrkomfort und rufen Schäden am Fahrzeug und am Gleisoberbau hervor. Aufgrund der damit verbundenen Entgleisungsgefahr, liegt eine hohe Gefährdung der Sicherheit im Schienenverkehr vor.

Unter Unrundheit sind verschiedene Ausprägungen zu subsummieren, so z.B. eine Exzentrizität, eine Ovalität, das Vorhandensein eines Material-Auftrages, das Vorhandensein einer Flachstelle / Abplattung sowie das Vorhandensein einer Polygonisation. Als Sonderform der Ovalität sei das Ausgebildetsein einer Ellipse erwähnt. Zur Polygonisation kommt es, wenn zumindest drei Ecken auf der Außenseite, nämlich dem Umfang des Rades vorliegen. Zum Teil kann diese Polygonisation, also das Vorliegen von drei und mehr Ecken periodisch vorhanden sein, kann aber auch ungleich verteilt sein. Eine Unrundheit liegt also bei einer oder mehreren Abweichungen von einer idealkreisrunden Außenkontur vor. Diese von der Idealform eines Kreises abweichenden Unrundheiten lassen sich in unterschiedlicher Ordnung kategorisieren. So ist eine Unrundheit erster Ordnung auch als Exzentrizität zu verstehen, wohingegen eine Unrundheit der zweiten Ordnung auch als Ovalität zu verstehen ist. Eine Unrundheit der dritten Ordnung ist eine Polygonisierung, die, je nach Ausprägung der Polygonisierung, auch eine größere als dritte Ordnung annehmen kann. Bisher ist es auch bekannt, Rundheitsmessungen mit einem so genannten Radunrundheitsmessgerät durchzuführen.

Die Ursache der Polygonisierung ist noch nicht vollständig geklärt. Sie ist jedoch teilweise in Systemeigenfrequenzen des Gleises und des jeweiligen Radsatzes begründet. Besonders bei Fahrt mit einer konstanten Geschwindigkeit über Strecken mit durchgehend gleichen Oberbauformen sind diese Systemeigenfrequenzen festzustellen.
Da es gilt, möglichst solche Räder einzusetzen, deren Lauffläche keine stellenweisen Abplattungen, ungleichmäßigen Kontaktflächen oder ungleichmäßig große Auswalzungen am Radkranz aufweisen, gilt es Unrundheiten bei Fahrzeugrädern, insbesondere im Schienenfahrzeugbereich, zu detektieren. Es ist bekannt, dass beim Rollen eines polygonisierten Rades über ein Gleis, fortlaufenden Schwingungen entstehen. Das Gleis mit dem entsprechenden Unterbau und Schienenfahrzeugrad stellen daher ein Feder-Masse-System dar, dessen Schwingverhalten im Hinblick auf seine Amplituden, Periodendauer, Nachschwingzeit, Frequenz etc. analysiert werden kann.

Bekannte Zusammenhänge sind dabei $U = d \cdot \pi$;

$$T = \frac{U}{v}; \quad f_n = \frac{1}{T} \cdot n = \frac{v}{U} \cdot n.$$

Mit d wird der Raddurchmesser in Meter angegeben, mit U der Radumfang in Metern, mit T die Periodendauer in Sekunden, mit v die Geschwindigkeit in m/s, mit n die Ordnung der Unrundheiten und mit $f_n$ die Frequenz der n-ten Ordnung der Unrundheiten in 1/s.

Es ist bekannt, zwei Messschwellen zu verwenden, die eine Messstrecke mit einer Länge von beispielsweise 1.200 mm definieren. Auch ist es bekannt, vier Messschwellen auf einer Messstreckenlänge von beispielsweise 2.400 mm zu verwenden, genauso wie es bekannt ist, acht Messschwellen über eine Messstreckenlänge von beispielsweise 4.800 mm zu verwenden. Je mehr Messschwellen eingesetzt werden und je größer die Messstreckenlänge ist, desto genauer ist die Messung.

Aus dem Stand der Technik sind bereits Vorrichtungen zur Feststellung von Unrundheiten und Flachstellen an Rädern bei Schienenfahrzeugen bekannt, wie z.B. die DE3309908 A1 und die EP2631150 A1. So offenbart bspw. die EP 1 212 228 B1 eine Vorrichtung zur Feststellung von Unrundheiten und Flachstellen an Fahrzeugrädern bei Schienenfahrzeugen innerhalb einer vorgegebenen Messstrecke mit Hilfe von mehreren Kraftsensoren zur Ermittlung der auf die Schienen wirkenden Vertikalkräfte, wobei eine Auswertevorrichtung vorgesehen ist, die Unrundheiten bzw. Flachstellen signalisiert. Das dort offenbarte Konzept ist dadurch gekennzeichnet, dass die Kraftaufnehmer als Wägezellen ausgebildet sind, die zwischen den Schienen und ortsfesten Querträgern oder Schwellen angeordnet sind und dass die Auswertevorrichtung beim Überfahren der Messstrecke aus den Vertikalkraftsignalen eine mittlere Gewichtsbelastung bildet und diese mit dem zeitlichen Kraftsignalverlauf vergleicht und bei Überschreiten einer vorgegebenen Abweichung als Unrundheit bzw. Flachstelle signalisiert oder anzeigt. Das dort vorgestellte Verfahren ist jedoch nicht unabhängig von den Federsteifigkeiten, die durch die Gleise, Schwellen, Abstände der Schwellen, Art des Untergrundes oder Steifigkeit des Untergrundes definiert werden. Es sollen aber gerade Einflüsse durch Änderung der Federsteifigkeiten und Auswirkungen unterschiedlicher Dämpfung des Untergrundes am Aufstellort der Messeinrichtung zumindest weitestgehend ausgeschaltet werden. Die zugesicherten messtechnischen Eigenschaften sollen eingehalten werden und gegenüber dem Stand der Technik verbessert werden. Messunsicherheiten sollen stark reduziert werden und eine Reproduzierbarkeit verbessert werden. Auch die Langzeitstabilität soll verbessert werden. Zusammengefasst sollen die aus dem Stand der Technik bekannten Nachteile gemindert oder sogar abgestellt werden.

Diese Aufgabe wird erfindungsgemäß gelöst durch eine Vorrichtung nach Anspruch 1 (und ein Verfahren nach Anspruch 8), wobei bei einer Diagnoseeinrichtung zur Feststellung von Unrundheit an Rädern von Schienenfahrzeugen innerhalb einer vorgegebenen Messstrecke, die mehrere Kraftsensoren umfasst, die zur Ermittlung von auf sie wirkenden Kräften vorgesehen sind und mit einer Auswertevorrichtung verbunden sind, die Auswertevorrichtung ausgelegt ist, ein von den Kraftsensoren weitergeleitetes Kraftsignal über die Zeit zu integrieren um den Kraftstoß zu ermitteln. Bei einem Schienenfahrzeugrad, das Unrundheiten aufweist, umfasst, das weitergeleitete Kraftsignal F einen quasistatischen Kraftanteil und einen dynamischen Kraftanteil. Der quasistatische Kraftanteil entspricht bei einem idealen kreisrunden Rad der Radaufstandskraft. Der dynamische Kraftanteil des weitergeleiteten Kraftsignals stellt dagegen den Kraftanteil dar, der durch Unrundheit des Schienenfahrzeugrades erzeugt wird. Die Auswertevorrichtung ist dementsprechend dazu ausgelegt, die Radaufstandskraft Fm zu ermitteln. Dies kann entweder rechnerisch oder über einen Filter geschehen. Außerdem ist die Auswertevorrichtung dazu ausgelegt, das weitergeleitete Kraftsignal um die Radaufstandskraft Fm zu korrigieren und anschließend den sich daraus ergebenden dynamischen Kraftanteil über ein Zeitintervall zu integrieren. Bei der Überfahrt eines Schienenfahrzeuges über eine Messstrecke werden die Lasten dann mit Kraftsensoren erfassbar, die zwischen den Schwellen und der Fahrschiene angeordnet sind. Hier lässt sich eine Anordnung einsetzen, die bereits als "MULTIRAIL WheelScan" bekannt ist.

Die Erfindung zeichnet sich also insbesondere dadurch aus, dass die Auswertung der Sensorsignale im Gegensatz zu bisher angewendeten Kraftamplituden-Auswerteverfahren auf einem Kraftstoß-Auswerteverfahren beruht. Dieses Kraftstoß-Auswerteverfahren zeigt im Gegensatz zur Kraftamplituden-Auswertung keine Abhängigkeit von den Feder-Steifigkeiten der Bauteile und Konstruktionen sowie des Untergrundes im Kraftfluss der jeweiligen Messstelle. Im Kraftfluss befinden sich nämlich neben den bezüglich ihrer Federkonstante langzeitstabilen Konstruktionsteilen wie Schiene, Zwischenlage, Rippenplatte, Sensor, Schwelle, der nicht langzeitstabile Kraft-Übergang Schwelle in das Schotterbett und dem Unterbau in das Erdreich. Umwelt-Einflüsse, wie z.B. Temperatur- und Feuchte-Änderungen führen dazu, dass sich insbesondere die Steifigkeits- und Dämpfungseigenschaften vom Unterbau und dem Erdreich verändern. Für eine bessere Diagnose von Radschäden wie Unrundheiten, insbesondere Flachstellen, wird nun nicht mehr ausschließlich die Kraftamplitude, sondern insbesondere der Kraftstoß berechnet und ausgewertet.

Der Unterschied zwischen einer Kraftamplitude und einem Kraftstoß sei kurz zusammengefasst. Während die maximale Kraftamplitude $F_{max}$ abhängig von den Steifigkeiten der vorgenannten Elemente ist, die sich im Kraftfluss befinden, ist dies beim Kraftstoß nicht der Fall.

Aus der Kraft auf einen Körper und deren Einwirkungsdauer ergibt sich eine Impulsänderung, die als Kraftstoß bezeichnet wird. Dabei spielen sowohl der Betrag als auch die Richtung der Kraft eine Rolle. Der Kraftstoß wird mit dem Formelzeichen $\vec{I}$ bezeichnet und in Newton-Sekunden 1 Ns angegeben.

Ist die Kraft F im Zeitintervall $\Delta t$ konstant, kann der Kraftstoß mittels folgender Gleichung berechnet werden:

$$\vec{I} = \Delta \vec{p} = \vec{F} \cdot \Delta t$$

Ist die Kraft F dagegen, wie bei Unrundheiten von Schienenfahrzeugrädern nicht konstant, kann wenn der zeitliche Vertikalkraftverlauf F(t) bekannt ist, der Kraftstoß durch Integration ermittelt werden:

$$\vec{I} = \Delta \vec{p} = \int \vec{F}(t) \cdot \mathrm{d}t$$

Je steifer die Gesamt-Anordnung ist, umso höhere Kraftamplituden treten auf. Entsprechend wird bei im Feld installierten Messeinrichtungen beobachtet, dass zum Beispiel bei gefrorenem Boden größere Kraftspitzen gemessen werden, als bei nicht gefrorenem Boden. Weiterhin ist der von einer Flachstelle erzeugte Kraftstoß $\vec{I}$ auch abhängig von der Größe der Flachstelle und von der Fahrgeschwindigkeit des Schienenfahrzeuges.

Der Kraftstoß $\vec{I}$ gibt dementsprechend einen Rückschluss auf eine Flachstelle oder eine Radunrundheit. Da die Einwirkzeit in die Berechnung mit einbezogen wird, ist der Kraftstoß $\vec{I}$ unabhängig von der Steifigkeit der sich im Kraftfluss befindlichen Elemente.

Bei einer steifen Anordnung ist die Einwirkungsdauer des Kraftstoßes kürzer und die Kraftamplitude größer. Bei kleiner werdender Steifigkeit wird der gleiche Kraftstoß über eine längere Einwirkungsdauer abgebaut und somit sind die Kraftamplituden über der Zeit kleiner. Der berechnete Kraftstoß ist bei beiden gleich. Da $\vec{F}(t)$ mit Kraftsensoren gemessen wird und somit bekannt ist, kann der Kraftstoß $\vec{I}$ durch Integration über die Zeit ermittelt werden.

Vorteilhafte Ausführungsformen sind in den Unteransprüchen beansprucht und werden nachfolgend näher erläutert.

So ist es von Vorteil, wenn die Auswertevorrichtung dazu ausgelegt ist, den dynamischen Kraftanteil über ein Zeitintervall zu integrieren, das die Nachschwingzeit umfasst und zum Zeitpunkt t2 endet. Erfindungsgemäß wird das Zeitintervall, über das der dynamische Kraftanteil integriert, zwischen dem Zeitpunkt t0, dem Auftreten des Stoßes durch die Unrundheit und dem Zeitpunkt t1, dem ersten Nulldurchgang des um die quasistatische Radaufstandskraft Fm korrigierten Kraftsignals F beginnt. Die dabei erhaltene Information führt zu einer größeren Genauigkeit des ausgegebenen Ergebnisses der Auswertevorrichtung.

Weiterhin ist es von Vorteil, wenn die Länge der Messstrecke wenigstens einem Radumfang eines Schienenfahrzeuges entspricht, so dass das gesamte Rad von der Diagnoseeinrichtung erfasst und geprüft werden kann.

Besonders gute Ergebnisse werden erzielt, wenn die Auswertevorrichtung zum Weiterverarbeiten des maximal auftretenden Kraftwerts, vorteilhafterweise zusammen mit dem Ergebnis der Kraftstoßauswertung, ausgelegt / vorbereitet ist.

Es ist zweckmäßig, wenn die Kraftsensoren nach Art von Wägezellen, Wägebalken oder Wägediscs zum Erfassen von Kräften, wie Schwerkraft und/oder Gewichtskräften, vorgesehen sind. Besonders robuste, verlässliche und kostengünstige Module lassen sich dann einsetzen.

Eine gute Abstimmung von Kosten, Langlebigkeit und Messeffizienz ergibt sich dann, wenn zumindest einer der Kraftsensoren oder alle Kraftsensoren einen oder mehrere Dehnungsmessstreifen einsetzt / einsetzen.

Es ist auch von Vorteil, wenn die Kraftsensoren unter mehreren Schienenträgern, wie Schwellen verteilt sind, etwa unter 5, 6, 7, 8 oder 9 Schwellen, und zwar in Längsrichtung der Schienen hintereinander. Die Kraftsensoren sind dabei paarweise pro Schwelle verteilt. Natürlich können die Kraftsensoren auch als Wägezellen ausgebildet sein, die zwischen den Schienen und ortsfesten Querträgern oder Schwellen angeordnet sind. Die Wägezellen können in einer Aussparung in den Schwellen vorgesehen sein, wobei sich die Schienen auf den Wägezellen abstützen. Um gute Messungen zu erreichen, ist es von Vorteil, wenn am Anfang und/oder am Ende der Messstrecke Schubspannungssensoren in der neutralen Phase der Schiene, vorgesehen sind, die zur Kraftnebenschlusskorrektur und/oder als Schienenschalter dienen.

Es ist von Vorteil, wenn aufgrund der erfassten Vertikalkraftsignale und der Schubspannungsmessung in der Auswertevorrichtung aus dem mittleren Radaufstandswert der einzelnen Räder oder Drehgestelle und aus den identifizierten Rädern oder Drehgestellen für einen Waggon zusätzlich die Summe der mittleren Belastung gebildet wird, die das Waggongewicht darstellt.

Es ist von Vorteil, wenn aufgrund der identifizierten Waggontypen und dem ermittelten Waggongewicht in der Auswertevorrichtung das Waggongewicht mit einem vorgegebenen Höchstwert verglichen wird und beim Überschreiten als Überlast signalisiert wird.

Bewährt hat es sich auch, wenn aufgrund der identifizierten Waggontypen und den ermittelten mittleren Achs- oder Drehgestellbelastungen in der Auswertevorrichtung mit Hilfe von vorgegebenen Achsabständen die Schwerpunktlage ermittelt ist und mit einem vorgegebenen zulässigen Schwerpunktbereich verglichen wird und beim Überschreiten des Schwerpunktbereichs dies als Schwerpunktfehler signalisierbar ist.

Die Erfindung betrifft auch ein Verfahren zum Ermitteln einer Unrundheit an Rädern von Schienenfahrzeugen innerhalb einer vorgegebenen Messstrecke, wobei die Kraftsignale mindestens eines Kraftsensors einer Auswertevorrichtung zugeleitet werden,

das Kraftsignal F, das einen quasistatischen und einen dynamischen Kraftanteil umfasst, in der Auswertevorrichtung verarbeitet wird,

indem eine quasistatische Radaufstandskraft Fm ermittelt wird,

das Kraftsignal F um die quasistatische Radaufstandskraft Fm korrigiert und der sich aus der Differenz von F und Fm ergebende dynamische Kraftanteil über ein Zeitintervall integriert wird, um einen Kraftstoß zu ermitteln,

Es ist dabei von Vorteil, wenn das Verfahren eine Diagnoseeinrichtung der erfindungsgemäßen Art verwendet.

Die Erfindung wird nachfolgend mit Hilfe einer Zeichnung näher erläutert. Es zeigen:

Fig. 1      einen Kraftsignalverlauf auf der Ordinate in Newton über die Zeit auf der Abszisse in Sekunden eingetragen, wie er bei einer typischen Messung einer Unrundheit auftritt;

Fig. 2      einen weiteren Kraftsignalverlauf auf der Ordinate über die Zeit auf der Abszisse , wie er bei einer typischen Messung einer Unrundheit auftritt, wobei hier bereits der Mittelwert Fm aus der Radaufstandskraft ermittelt wurde;

Fig. 3      den Kraftsignalverlauf aus Fig. 2, wobei dieser bereits um den Mittelwert Fm bereinigt dargestellt ist,

Fig.4      zwei Kraftsignalverläufe F1 und F2, deren Integration über die Zeit bei unterschiedlichen Kraftspitzen F1 max und F2max denselben Kraftstoß I1=I2 ergibt, und

Fig. 5      einen Querschnitt durch eine Schiene mit einer Diagnoseeinrichtung gemäß einer ersten Ausführungsform.

Die Figuren sind lediglich schematischer Natur und dienen nur dem Verständnis der Erfindung. Die gleichen Elemente sind mit denselben Bezugszeichen versehen.

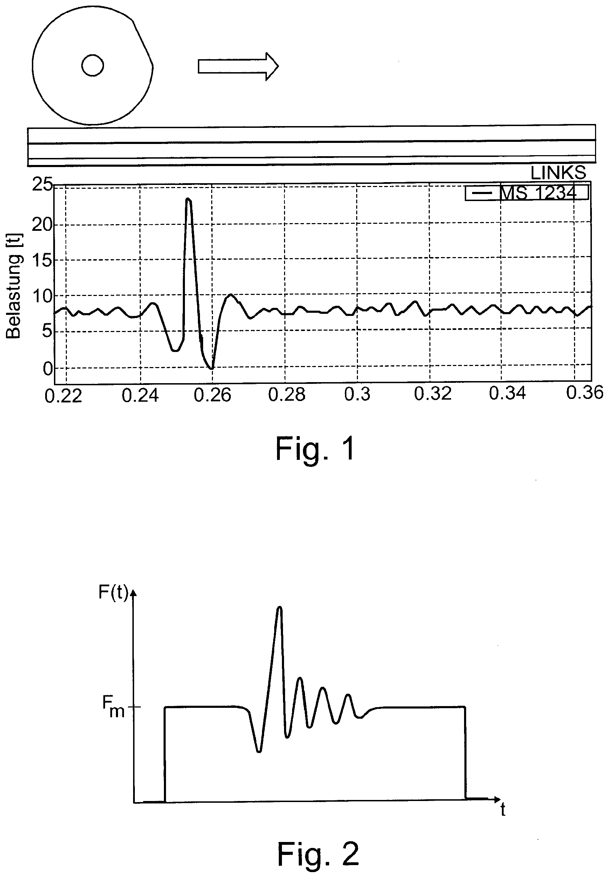

In Fig. 1 ist der Kraftsignalverlauf bei Überfahrt eines unrunden Schienenfahrzeugrades über eine Messstelle oder eine Messstrecke dargestellt. Der Kraftsignalverlauf auf der Ordinate in Newton ist dabei über die Zeit auf der Abszisse in Sekunden eingetragen. Aus dem Kraftsignalverlauf wird dabei deutlich, dass dieses im Bereich der Unrundheit oder Abplattung des Schienenfahrzeugrades zunächst einen Rückgang gegenüber dem sich aus der Radaufstandskraft ergebenden Mittelwert erfährt, worauf dann, bei Auftreffen der Unrundheit auf die Schiene, eine Kraftspitze Fmax folgt.

In Fig. 2 ist ein weiterer Kraftsignalverlauf auf der Ordinate über die Zeit auf der Abszisse dargestellt, wobei hier bereits der Mittelwert Fm, der der quasistatischen Radaufstandskraft entspricht, ermittelt wurde. Für die Ermittlung des Kraftstoßes $\vec{I}$ mit Hilfe der Auswerteeinheit wird das Vertikalkraftsignal über das dargestellte Zeitintervall integriert. Außerdem wird der berechnete Kraftstoß $\vec{I}$ um den Anteil des Mittelwerts $F_m$, der die quasistatische Radkraft repräsentiert, korrigiert. Die Korrektur des Kraftsignals kann dabei rechnerisch oder mittels eines Filters erfolgen.

Der mechanische Aufbau der zum Erfassen der in den Fig. 1 oder 2 dargestellten Signale ist in der EP 1 212 228 B1 bereits vorgestellt und soll als hier integriert gelten. Anders als dort offenbart, wird aber nicht mehr nur die maximale Kraftamplitude $F_{max}$ ermittelt, sondern der von einer Unrundheit verursachte Kraftstoß ermittelt. Also wird über einen bestimmten Zeitraum T die Kraftsignalabweichung unter Berücksichtigung des Mittelwerts $F_m$ integriert nach der Formel

$$\vec{I} = \Delta\vec{p} = \int_{t_0}^{t_2} \vec{F}(t) \cdot dt - \int_{t_0}^{t_2} \vec{F}_m(t) \cdot dt \; .$$

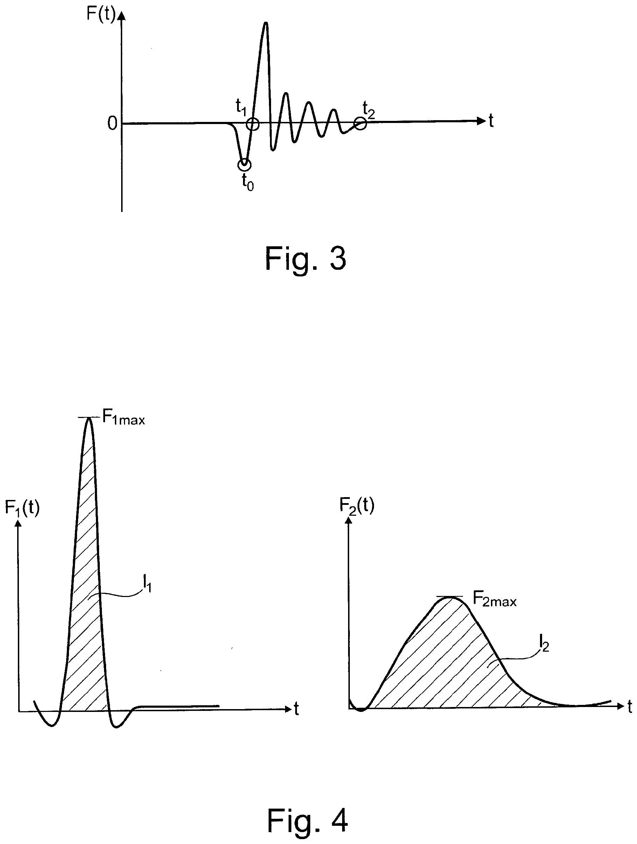

Schließlich ist in Fig. 3 der Kraftsignalverlauf aus Fig. 2, der bereits um den Mittelwert Fm oder die quasistatische Radaufstandskraft bereinigt wurde, dargestellt. Die Erkennung des Kraftstoßes in dem Kraftsignalverlauf wird von einem Auswertealgorithmus berechnet und optimiert. Dementsprechend werden der Startzeitpunkt $t_0$ und der Endzeitpunkt $t_2$ des Zeitintervalls T über den Auswertealgorithmus ermittelt.

In Fig.4 sind zum besseren Verständnis zwei Kraftsignalverläufe F1(t) und F2 (t) dargestellt, deren Integration über die Zeit bei unterschiedlichen Kraftspitzen $F_{1\,max}$ und $F_{2\,max}$ denselben Kraftstoß I1=I2 ergibt. Hieraus wird deutlich, dass bei unterschiedlichen Steifigkeiten des Untergrundes bzw. der Messstrecke die Kraftspitzen einer Unrundheit und auch die Schwingungszeit der durch die Unrundheit verursachten Schwingung in Abhängigkeit von der Steifigkeit variieren können. Während daher die Kraftspitze wenig über die Qualität einer Unrundheit aussagt, kann der ermittelte Kraftstoß als Grenzwert für Bewertung des Zustandes eines Schienenfahrzeugrades herangezogen werden.

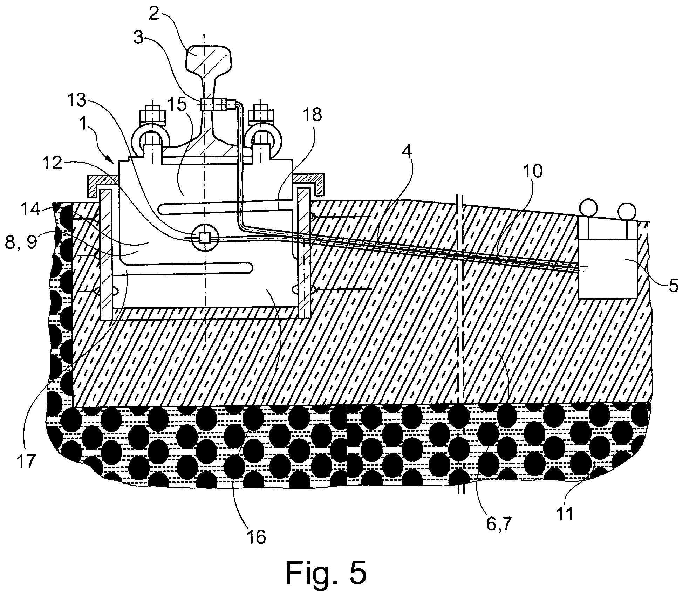

In Fig. 5 ist eine erfindungsgemäße Diagnoseeinrichtung 1 dargestellt. Die Diagnoseeinrichtung 1 wird zur Feststellung von Unrundheiten bei Rädern von Schienenfahrzeugen eingesetzt. Eine Schiene ist mit dem Bezugszeichen 2 gekennzeichnet. Ein Kraftsensor in Form eines Schubspannungssensors 3 ist über eine erste elektrische Leitung 4 mit einer Auswertevorrichtung 5 verbunden. Unterhalb der Schiene 2 und innerhalb eines Querträgers 6, der als Schwelle 7 ausgebildet ist, ist ein Kraftsensor 8 vorhanden. Der Kraftsensor 8 ist in diesem Ausführungsbeispiel nach Art einer Wägezelle 9 ausgebildet.

Genauso wie der Schubspannungssensor 3 ist auch der Kraftsensor 8, bzw. die Wägezelle 9 über eine Leitung, nämlich eine zweite elektrische Leitung 10 mit der Auswertevorrichtung 5 verbunden. Der Querträger 6, bzw. die Schwelle 7 liegt auf einem Schotterbett 11 oder auf einer festen Fahrbahn auf. Der Kraftsensor 8 weist einen Dehnungsmessstreifen 12, der in einer Sackbohrung 13 angeordnet ist, wobei die Sackbohrung 13 wiederum in einem Verformungskörper oder Messkörper 14 vorgesehen ist. Der Kraftsensor 8 ist maßgeblich durch ein Krafteinleitungselement 15 und ein Kraftausleitungselement 16 definiert. Zum definierten Kraftfluss bzw. zur definierten Führung der Kraft von der Einleitungsstelle über den Dehnungsmessstreifen 12 zur Lastausleitungsstelle durch den Kraftsensor 8 sind horizontale Querschlitze 17 und 18 vorhanden.

**Bezugszeichenliste**

| 1 | Diagnoseeinrichtung |
|---|---|
| 2 | Schiene |
| 3 | Schubspannungssensor |
| 4 | erste elektrische Leitung |
| 5 | Auswertevorrichtung |
| 6 | Querträger |
| 7 | Schwelle |
| 8 | Kraftsensor |
| 9 | Wägezelle |
| 10 | zweite elektrische Leitung |
| 11 | Schotterbett |
| 12 | Dehnungsmessstreifen |
| 13 | Sackbohrung |
| 14 | Messkörper |
| 15 | Krafteinleitungselement |
| 16 | Kraftausleitungselement |
| 17 | horizontaler Querschlitz |
| 18 | horizontaler Querschlitz |

**Patentansprüche**

1. Diagnoseeinrichtung (1) zur Feststellung einer Unrundheit an Rädern von Schienenfahrzeugen innerhalb einer vorgegebenen Messstrecke, mit mehreren Kraftsensoren (8), die zur Ermittlung von auf sie wirkenden Kräften aus einem Schienenfahrzeugrad ausgelegt sind und mit einer Auswertevorrichtung (5) verbunden sind, die ausgelegt ist,

  - ein von den Kraftsensoren (8) weitergeleitetes Kraftsignal F, das einen quasistatischen und einen dynamischen Kraftanteil umfasst, zu verarbeiten,
  - eine quasistatische Radaufstandskraft $F_m$ zu ermitteln,
  - und das Kraftsignal F um die quasistatische Radaufstandskraft $F_m$ zu korrigieren, **dadurch gekennzeichnet, dass**
  - die Auswertevorrichtung zudem ausgelegt ist, den sich dadurch ergebenden dynamischen Kraftanteil über ein Zeitintervall zu integrieren, um einen Kraftstoß zu ermitteln
  - wobei das Zeitintervall zwischen einem Zeitpunkt t0, dem Auftreten des Stoßes, und einem Zeitpunkt t1, dem ersten Nulldurchgang des um die quasistatische Radaufstandskraft Fm korrigierten Kraftsignals F, beginnt.

2. Diagnoseeinrichtung gemäß Anspruch 1, **dadurch gekennzeichnet, dass** das Zeitintervall die Abklingzeit einer Nachschwingung umfasst und zu einem Zeitpunkt $t_2$ endet.

3. Diagnoseeinrichtung (1) nach einem der Ansprüche 1 oder 2, **dadurch gekennzeichnet, dass** die Kraftsensoren (8) als Wägezellen (9), Wägebalken oder Wägediscs vorgesehen sind.

4. Diagnoseeinrichtung (1) nach einem der Ansprüche 1 bis 3, **dadurch gekennzeichnet, dass** die Auswertevorrichtung (5) zum Weiterverarbeiten der maximal auftretenden Kraftamplitude $F_{max}$ vorgesehen ist.

5. Diagnoseeinrichtung (1) nach einem der Ansprüche 1 bis 4, **dadurch gekennzeichnet, dass** zumindest einer der Kraftsensoren (8) oder alle Kraftsensoren (8) einen oder mehrere Dehnungsmessstreifen (12) einsetzt / einsetzen.

6. Diagnoseeinrichtung (1) nach einem der Ansprüche 1 bis 5, **dadurch gekennzeichnet, dass** die Messstrecke größer gleich (≥) dem Radumfang eines der zu messenden Räder eines Schienenfahrzeuges ist.

7. Diagnoseeinrichtung (1) nach einem der Ansprüche 1 bis 6, **dadurch gekennzeichnet, dass** die Kraftsensoren (8) zwischen den Schienen und Schwellen vorgesehen sind.

8. Verfahren zum Ermitteln einer Unrundheit an Rädern von Schienenfahrzeugen innerhalb einer vorgegebenen Messstrecke, wobei die Kraftsignale mindestens eines Kraftsensors (8) einer Auswertevorrichtung (5) zugeleitet werden,

  - das Kraftsignal F, das einen quasistatischen und einen dynamischen Kraftanteil umfasst, in der Auswertevorrichtung verarbeitet wird,
  - indem eine quasistatische Radaufstandskraft $F_m$ ermittelt wird,
  - das Kraftsignal F um die quasistatische Radaufstandskraft Fm korrigiert, **dadurch gekennzeichnet, dass**
  - der sich aus der Differenz von F und $F_m$ ergebende dynamische Kraftanteil über ein Zeitintervall integriert wird, um einen Kraftstoß zu ermitteln,
  - wobei das Zeitintervall zwischen einem Zeitpunkt t0, dem Auftreten des Stoßes, und einem Zeitpunkt t1, dem ersten Nulldurchgang des um die quasistatische Radaufstandskraft Fm korrigierten Kraftsignals F, beginnt.

9. Verfahren gemäß Anspruch 8, **dadurch gekennzeichnet, dass** das Zeitintervall die Abklingzeit einer Nachschwingung umfasst.

**Claims**

1. Diagnostic device (1) for detecting an out-of-roundness in wheels of rail vehicles within a specified measuring section, having multiple force sensors (8) that are designed to sense forces acting on them from a rail vehicle wheel and are connected to an analysis device (5) that is designed

  - to process a force signal F transmitted by the force sensors (8), which includes a quasi-static force component and a dynamic force component,
  - to determine a quasi-static wheel contact force $F_m$,
  - and to correct the force signal F by the quasi-static wheel contact force $F_m$, **characterized in that**
  - the analysis device is additionally designed to integrate the resultant dynamic force component over a time interval in order to determine an impulse,
  - wherein the time interval begins between a time t0, the occurrence of the impulse, and a time t1, the first zero crossing of the force signal F corrected by the quasi-static wheel contact force

$F_m$.

2. Diagnostic device according to claim 1, **characterized in that** the time interval includes the decay time of a reverberation and ends at a time $t_2$.

3. Diagnostic device (1) according to one of claims 1 or 2, **characterized in that** the force sensors (8) are provided as load cells (9), weighbeams, or weighing discs.

4. Diagnostic device (1) according to one of claims 1 to 3, **characterized in that** the analysis device (5) is provided for further processing of the maximum force amplitude $F_{max}$ that occurs.

5. Diagnostic device (1) according to one of claims 1 to 4, **characterized in that** at least one of the force sensors (8) or all force sensors (8) uses / use one or more strain gauges (12).

6. Diagnostic device (1) according to one of claims 1 to 5, **characterized in that** the measuring section is greater than or equal to ($\geq$) the wheel circumference of one of the wheels to be measured of a rail vehicle.

7. Diagnostic device (1) according to one of claims 1 to 6, **characterized in that** the force sensors (8) are provided between the rails and ties.

8. Method for identifying an out-of-roundness in wheels of rail vehicles within a specified measuring section, wherein the force signals of at least one force sensor (8) are supplied to an analysis device (5),

- the force signal F, which includes a quasi-static and a dynamic force component, is processed in the analysis device,
- in that a quasi-static wheel contact force $F_m$ is determined,
- the force signal F is corrected by the quasi-static wheel contact force $F_m$, **characterized in that**
- the dynamic force component resulting from the difference between F and $F_m$ is integrated over a time interval in order to determine an impulse,
- wherein the time interval begins between a time t0, the occurrence of the impulse, and a time t1, the first zero crossing of the force signal F corrected by the quasi-static wheel contact force $F_m$.

9. Method according to claim 8, **characterized in that** the time interval includes the decay time of a reverberation.

**Revendications**

1. Dispositif de diagnostic (1) pour la constatation d'une ovalisation sur des roues de véhicules ferroviaires sur une portion de mesure prédéterminée, avec plusieurs capteurs de force (8), qui sont conçus pour la détermination des forces qui sont exercées sur eux à partir d'une roue de véhicule ferroviaire, et sont reliés avec un dispositif d'analyse (5) conçu

- pour traiter un signal de force F transmis par les capteurs de forces (8), qui comprend une composante de force quasi-statique et une composante de force dynamique,
- pour déterminer une force d'appui de roue $F_m$,
- et pour corriger le signal de force F de la force d'appui de roue quasi-statique $F_m$, **caractérisé en ce que**
- le dispositif d'analyse est en outre conçu pour intégrer la composante de force dynamique qui en résulte sur un intervalle de temps afin de déterminer un impact,
- l'intervalle de temps commençant entre un moment t0, la survenue de l'impact, et un moment t1, le premier passage à zéro du signal de force F corrigé de la force d'appui quasi-statique $F_m$.

2. Dispositif de diagnostic selon la revendication 1, **caractérisé en ce que** l'intervalle de temps comprend le temps de décroissance d'une oscillation postérieure et se termine à moment t2.

3. Dispositif de diagnostic (1) selon l'une des revendications 1 ou 2, **caractérisé en ce que** les capteurs de forces (8) sont conçus comme des cellules de pesée (9), des barres ou des disques de pesée.

4. Dispositif de diagnostic (1) selon l'une des revendications 1 à 3, **caractérisé en ce que** le dispositif d'analyse (5) est conçu pour le traitement de l'amplitude de force maximale $F_{max}$.

5. Dispositif de diagnostic (1) selon l'une des revendications 1 à 4, **caractérisé en ce qu'**au moins un des capteurs de forces (8) ou tous les capteurs de forces (8) utilise(nt) une ou plusieurs jauges de contrainte (12).

6. Dispositif de diagnostic (1) selon l'une des revendications 1 à 5, **caractérisé en ce que** la portion de mesure est supérieure ou égale ($\geq$) à la circonférence d'une des roues à mesurer d'un véhicule ferroviaire.

7. Dispositif de diagnostic (1) selon l'une des revendications 1 à 6, **caractérisé en ce que** les capteurs de forces (8) sont disposés entre les rails et les traverses.

**8.** Procédé de détermination d'une ovalisation sur des roues de véhicules ferroviaires sur une portion de mesure prédéterminée, les signaux de forces d'au moins un capteur de force (8) étant entrés dans un dispositif d'analyse (5),

- le signal de force F, qui comprend une composante de force quasi-statique et une composante de force dynamique, est traité dans le dispositif d'analyse,
- grâce au fait que la force d'appui quasi-statique sur les roues $F_m$ est déterminée,
- le signal de force F est corrigé de la force d'appui quasi-statique sur les roues, **caractérisé en ce que**
- la composante de force dynamique résultant de la différence entre F et $F_m$ est intégrée sur un intervalle de temps afin de déterminer un impact,
- l'intervalle de temps commençant entre un moment t0, la survenue de l'impact, et un moment t1, le premier passage à zéro du signal de force F corrigé de la force d'appui quasi-statique sur les roues $F_m$.

**9.** Procédé selon la revendication 8, **caractérisé en ce que** l'intervalle de temps comprend le temps de décroissance d'une oscillation postérieure.

Fig. 1

Fig. 2

Fig. 3

Fig. 4

Fig. 5

**EP 3 265 774 B1**

**IN DER BESCHREIBUNG AUFGEFÜHRTE DOKUMENTE**

**In der Beschreibung aufgeführte Patentdokumente**

- DE 3309908 A1
- EP 2631150 A1
- EP 1212228 B1